# FASCICULE DE BREVET EUROPEEN

(11) **EP 2 868 933 B1**
(45) Date de publication et mention de la délivrance du brevet: **14.12.2016**
(21) Numéro de dépôt: 14189593.8
(22) Date de dépôt: 20.10.2014
(51) Int. Cl.: F16B 7/10

(54) **Elément de blocage d'au moins deux tubes enfiles l'un dans l'autre, et structure de liaison à tubes télescopiques le comprenant**
Blockierelement für mindestens zwei ineinander geschobene Rohre und Verbindungsstruktur zu Teleskop-Rohren, die dieses Element umfassen
Element for locking at least two tubes inserted into one another, and connecting structure with telescopic tubes including same

(30) Priorité: 22.10.2013 FR 1360267
(43) Date de publication de la demande: 06.05.2015
(73) Titulaire: Provost, Jean-Claude, 44400 Reze (FR)
(72) Inventeur: Provost, Jean-Claude, 44400 Reze (FR)
(74) Mandataire: Chaillot, Geneviève

(56) Documents cités:
- DE-U1-202010 000 049
- US-A- 5 893 196
- US-B1- 6 254 305

## Description

La présente invention concerne un élément pour bloquer en position, l'un par rapport à l'autre, au moins deux tubes enfilés l'un dans l'autre, et une structure de liaison à tubes télescopiques munie d'un tel élément de blocage.

Dans la présente, on entend par le terme « tube » toute pièce longue creuse, de section quelconque.

On utilise dans de nombreux secteurs techniques des tubes enfilés l'un dans l'autre d'une manière télescopique, notamment en tant que conduits de raccordement, pieds de support de bureau et chaise réglables en hauteur, poignées de bagage rétractables, bâtons de ski réglables, manches télescopiques d'appareil de nettoyage, etc.

Dans de telles utilisations, il est nécessaire d'immobiliser les deux tubes après leur emmanchement, aussi bien à l'égard d'une rotation relative que d'une translation.

On connaît des dispositifs de blocage que l'on utilise pour immobiliser des tubes comportant chacun au moins un trou traversant, le tube de plus grande section comportant généralement une série de trous régulièrement espacés, et que l'on place à l'intérieur du tube de section plus petite. Ces dispositifs de blocage comprennent notamment un élément de blocage formé par une bande de matière portant un bouton d'actionnement passant à travers lesdits trous traversants dans la position de blocage des tubes, et un ressort de rappel de l'élément de blocage vers ladite position de blocage.

Un exemple d'un tel élément de blocage est décrit dans le brevet américain US 5 893 196, l'élément de blocage consistant en une bande en forme de O à l'intérieur de laquelle est disposé un ressort de compression.

Ce type d'élément de blocage permet à l'utilisateur de débloquer les tubes de manière très aisée, par simple appui sur le bouton d'actionnement à l'encontre de la force exercée par le ressort. L'utilisateur peut alors faire coulisser les tubes l'un par rapport à l'autre jusqu'à la position souhaitée, où un trou traversant du tube de plus grande section est aligné avec un trou traversant du tube de section plus petite, le blocage étant obtenu automatiquement sous l'action du ressort, avec un contrôle facile et visuel du blocage.

Cependant, le montage correct de l'élément de blocage et du ressort à l'intérieur des tubes n'est pas aisé et des opérations de déblocage/blocage répétées conduisent souvent au mieux à un moins bon fonctionnement du dispositif de blocage, au pire à ce qu'il ne fonctionne plus du tout.

Un autre exemple d'élément de blocage est décrit dans DE 20 2010 000049 U1.

La présente invention vise à résoudre les problèmes mentionnés ci-dessus et à ainsi proposer une solution avec laquelle le montage est très aisé, sans risque de montage incorrect et avec une fiabilité améliorée pour une utilisation répétée, tout en assurant une immobilisation des deux tubes aussi bien à l'égard d'une rotation relative que d'une translation et en conservant un contrôle facile et visuel du blocage.

La présente invention a donc d'abord pour objet un élément de blocage destiné à bloquer en position relativement l'un à l'autre deux tubes, enfilés l'un dans l'autre, et à être introduit dans le tube de section plus petite, ledit élément de blocage se présentant sous la forme d'une bande de matière ayant une direction longitudinale et portant sur une face un bouton d'actionnement bloquant les deux tubes, sous l'action d'une force de rappel, par passage à travers un trou traversant ménagé dans l'épaisseur de chaque tube, caractérisé par le fait que l'élément de blocage est réalisé en une matière élastiquement déformable en flexion et suit une forme d'arc avec les deux extrémités longitudinales de l'élément de blocage en regard l'une de l'autre, lesdites extrémités longitudinales présentant, dans leur bord transversal, au moins une partie en retrait et au moins une partie en saillie, avec la ou chacune des parties en retrait et la ou chacune parties en saillie de l'une desdites extrémités longitudinales en regard respectivement d'une partie en saillie et d'une partie en retrait de l'autre extrémité longitudinale, le bouton d'actionnement se trouvant au sommet de l'élément de blocage, côté opposé auxdites extrémités longitudinales.

Selon une configuration particulière de la présente invention, le bord transversal de l'une des extrémités longitudinales de l'élément de blocage présente au moins deux parties en saillie, de préférence deux parties en saillie, chacune entre deux parties en retrait et le bord transversal de l'autre extrémité longitudinale présente au moins deux parties en retrait, de préférence deux parties en retrait, chacune entre deux parties en saillie.

De préférence, le bord transversal de chaque extrémité longitudinale de l'élément de blocage est crénelé, les créneaux formant les parties en retrait.

Avantageusement, les extrémités longitudinales de l'élément de blocage sont rectilignes ou sensiblement rectilignes et la partie centrale de la bande de matière, qui relie les deux extrémités longitudinales, suit un arc de cercle.

Les extrémités longitudinales rectilignes peuvent s'écarter l'une de l'autre en formant un angle compris entre 10 et 13°, de préférence un angle de 10°, l'angle étant mesuré dans un plan qui est perpendiculaire à la bande de matière et auquel appartient la direction longitudinale de l'élément de blocage.

De préférence, chaque extrémité longitudinale de l'élément de blocage forme une patte de largeur supérieure à celle de la partie restante de la bande de matière, qui s'étend entre les deux pattes, les pattes étant, de préférence, de forme rectangulaire.

Deux nervures longitudinales peuvent s'étendre sur la face de la bande de matière sur laquelle se trouve le bouton d'actionnement, les nervures longitudinales étant disposées de part et d'autre du bouton d'actionnement et, de préférence, s'achevant avant les extrémités longitudinales de l'élément de blocage.

La bande de matière formant l'élément de blocage est avantageusement en matière plastique, de préférence en polyoxyméthylène.

L'extrémité libre du bouton d'actionnement est, de préférence, de forme hémisphérique.

La présente invention a également pour objet une structure de liaison à tubes télescopiques, comprenant deux tubes enfilés l'un dans l'autre de manière télescopique et des moyens de blocage des deux tubes relativement l'un à l'autre, chaque tube présentant au moins un trou traversant, caractérisée par le fait que les moyens de blocage sont formés par un élément de blocage tel que défini ci-dessus placé dans le tube de section plus petite, l'élément de blocage étant dimensionné de telle sorte que, dans la position de blocage des deux tubes, l'extrémité libre du bouton d'actionnement est exposée à l'extérieur et la bande de matière est contrainte en flexion avec les parties en saillie des extrémités longitudinales de l'élément de blocage en contact avec la paroi intérieure du tube de section plus petite.

La structure de liaison à tubes télescopiques peut, par exemple, être utilisée dans un pied de support de bureau ou de chaise réglable en hauteur, dans une poignée de bagage rétractable, dans un bâton de ski réglable en longueur, dans un manche télescopique d'appareil ménager, etc.

Avantageusement, la structure de liaison à tubes télescopiques comporte des moyens de guidage en translation du tube de plus petite section à l'intérieur du tube de plus grande section, lesquels moyens de guidage empêchent une rotation relative entre les tubes autour d'un axe de rotation coaxial à l'axe longitudinal des tubes, les axes des trous traversants des tubes appartenant donc tous à un même plan passant par l'axe longitudinal des tubes, et la paroi intérieure du tube de plus petite section présente deux nervures intérieures longitudinales diamétralement opposées et dont les directions longitudinales appartiennent à un plan qui passe par l'axe longitudinal des tubes et est perpendiculaire au plan auquel appartiennent les axes des trous traversants, l'élément de blocage étant, dans la position de blocage, en contact avec lesdites deux nervures intérieures.

Pour mieux illustrer l'objet de la présente invention, on va en décrire ci-après un mode de réalisation particulier, avec référence au dessin annexé.

Sur ce dessin :
- la Figure 1 est une vue en perspective de l'élément de blocage selon la présente invention ;
- la Figure 2 est une vue de face de l'élément de blocage de la Figure 1 ;
- la Figure 3 est une vue de côté de l'élément de blocage de la Figure 1 ;
- la Figure 4 est une vue schématique en coupe transversale d'une structure de liaison à tubes télescopiques selon la présente invention, les tubes étant mutuellement verrouillés par l'élément de blocage ;
- la Figure 5 est une vue schématique partielle, en coupe transversale, d'une structure de liaison à tubes télescopiques selon la présente invention, les tubes étant déplaçables l'un par rapport à l'autre ; et
- la Figure 6 est une vue schématique en perspective d'une structure de liaison à tubes télescopiques selon la présente invention, les tubes étant déplaçables l'un par rapport à l'autre.

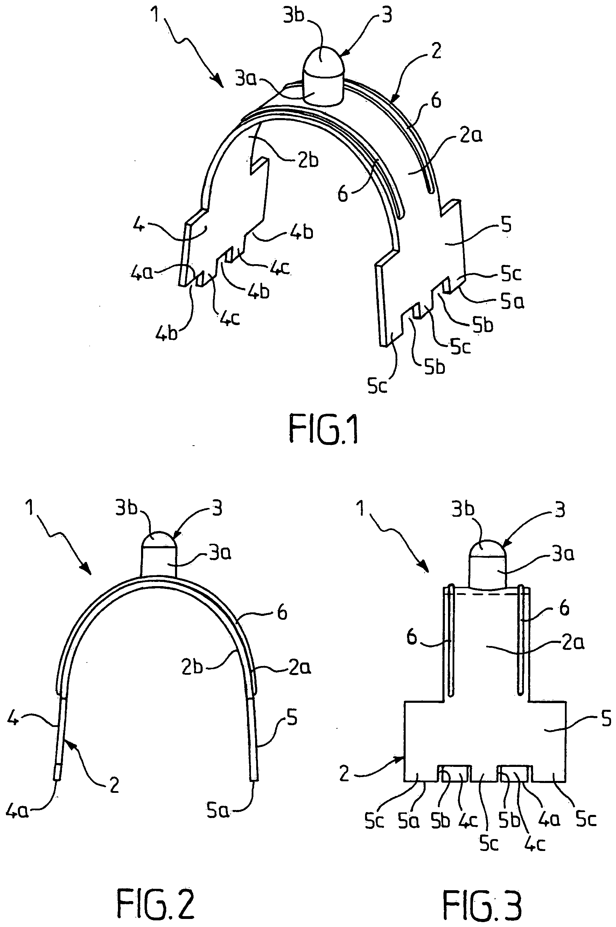

Si l'on se réfère aux Figures 1 à 3, on peut voir que l'élément de blocage 1 selon la présente invention formé par une bande de matière 2 ayant une face intérieure 2a et une face extérieure 2b et qui suit globalement, à l'état non contraint, la forme d'un arc. En particulier, la bande de matière 2 est cintrée de manière centrée dans sa direction longitudinale, de telle sorte que les deux extrémités longitudinales de l'élément de blocage 1 sont en regard l'une de l'autre.

Un bouton d'actionnement 3 s'étend à partir de la face extérieure 2b, au centre de la bande de matière 2 à la fois dans la direction longitudinale et dans la direction transversale de celle-ci. Le bouton 3 se situe ainsi au sommet de l'arc suivi par la bande de matière 2, les bords transversaux desdites deux extrémités longitudinales étant à équidistance du bouton 3. Le bouton 3 comprend une partie inférieure cylindrique 3a, par laquelle il est relié à la face extérieure 2b, et une extrémité libre 3b de forme hémisphérique.

Lesdites deux extrémités longitudinales consistent chacune en une patte 4, 5 de forme rectangulaire. La direction longitudinale de chaque patte 4, 5 est transversale à la direction longitudinale de la bande de matière 2 prise dans son ensemble. Les pattes 4, 5 sont de mêmes dimensions et la longueur des pattes 4, 5, ou autrement dit la largeur de la bande de matière 2 auxdites extrémités longitudinales, est supérieure à la largeur de la bande de matière 2 dans la partie centrale, située entre les deux pattes 4, 5.

Le bord transversal de chaque extrémité longitudinale de l'élément de blocage 1, à savoir le bord longitudinal libre 4a, 5a de chaque patte 4, 5 côté opposé à la partie centrale de la bande de matière 2, est crénelé.

En particulier, le bord transversal 4a de la patte 4, à gauche si l'on observe les Figures 1 et 2, est crénelé et comprend trois créneaux 4b, formant chacun une partie dite en retrait, et deux parties en saillie 4c séparant chacune deux parties en retrait 4b. Le bord transversal 4a est en outre crénelé de telle sorte que la partie en retrait 4b, dite centrale, qui se trouve entre les deux parties en saillie 4c, est centrée sur la direction longitudinale moyenne de la bande de matière 2.

Par ailleurs, le bord transversal 5a de la patte 5, à droite si l'on observe toujours les Figures 1 et 2, est également crénelé, mais de façon à comprendre trois parties en saillie 5c et deux créneaux 5b, formant chacun une partie en retrait, séparant chacun deux parties en saillie 5c. La partie en saillie 5c, dite centrale, qi sépare les deux parties en retrait 5b, est centrée sur la direction longitudinale moyenne de la bande de matière 2.

Si l'on se réfère également à la Figure 3, on peut voir que la largeur des deux parties en saillie 4c et celle de la partie en saillie 5b centrale est légèrement, voire très légèrement, inférieure respectivement à la largeur des deux parties en retrait 5b et à la largeur de la partie en retrait 4c centrale.

La configuration décrite ci-dessus des pattes 4, 5 conduit ainsi à ce que chaque partie en retrait 4b, 5b d'une patte 4, 5 est en regard d'une partie en saillie 5c, 4c correspondante de l'autre patte 5, 4, comme on peut clairement le voir sur la Figure 3.

Si l'on se réfère à nouveau à la Figure 2, on peut également voir qu'à l'état non contraint de l'élément de blocage 1, la partie centrale de la bande de matière 2 suit un arc de cercle et les pattes 4, 5 sont rectilignes et divergent l'une de l'autre.

Enfin, deux nervures longitudinales 6, participant à la résistance mécanique de l'élément de blocage 1, sont disposées sur la face extérieure 2b, de part et d'autre du bouton 3 et à équidistance de ce dernier. Les deux extrémités des nervures 6 s'achèvent au voisinage des pattes 4, 5.

Dans le présent mode de réalisation, la bande de matière 2 forme d'une seule pièce les deux pattes 4, 5, avec une épaisseur constante. Le bouton 3 est rendu solidaire de la bande de matière 2 par tout moyen approprié, par exemple par collage, moulage total, etc.

La bande de matière 2 est réalisée en une matière déformable élastiquement en flexion, telle qu'une matière plastique, de préférence le polyoxyméthylène (POM).

L'élément de blocage 1 présente donc dans son ensemble une résistance élevée à la traction et aux chocs, une excellente résistance à la fatigue, une très bonne résistance aux agents chimiques, une excellente stabilité dimensionnelle, une bonne résistance au fluage, un faible coefficient de frottement, une très bonne résistance à l'abrasion et une large plage de température d'utilisation.

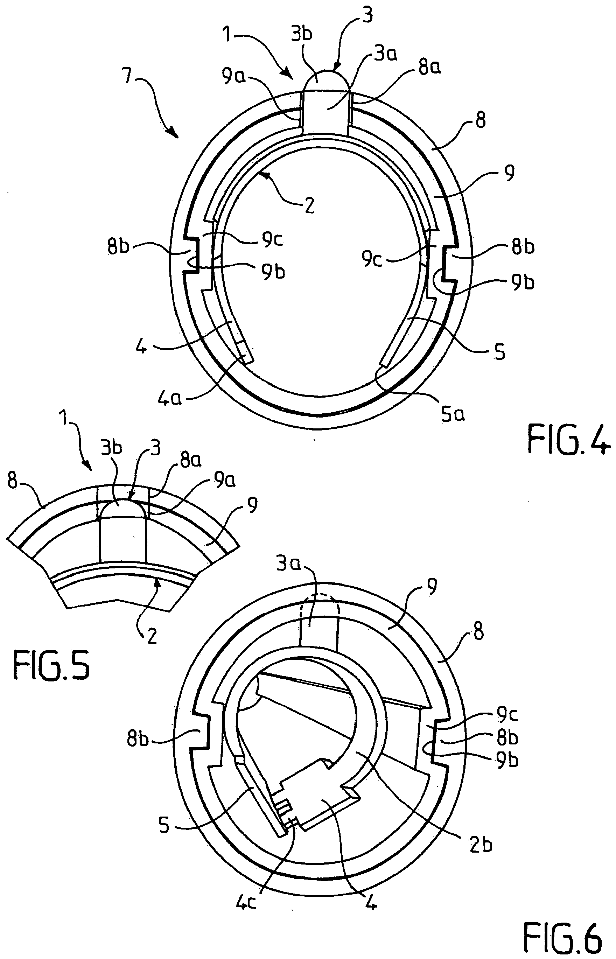

On va maintenant décrire ci-après le fonctionnement de l'élément de blocage 1, avec référence à la Figure 4, sur laquelle on a représenté, en vue en coupe transversale, une structure de liaison à tubes télescopiques 7 selon la présente invention, les tubes étant bloqués en position l'un par rapport à l'autre par l'élément de blocage 1, et avec référence aux Figures 5 et 6, sur lesquelles on a représenté la structures de liaison à tubes télescopiques avec les tubes mobiles en translation l'un par rapport à l'autre.

La structure 7 comprend un tube extérieur 8 de plus grande section, un tube intérieur 9 de section plus petite dont une partie est introduite à l'intérieur du tube extérieur 8, et l'élément de blocage 1 monté à l'intérieur du tube intérieur 9 pour pouvoir bloquer en position le tube intérieur 9 et le tube extérieur 8.

Par exemple, la structure 7 peut former une partie d'un poteau d'une cage de football.

Dans un tel cas, un trou traversant 8a, 9a est ménagé dans la paroi respectivement du tube extérieur 8 et du tube intérieur 9.

Le tube intérieur 9 est guidé en translation dans le tube extérieur 8 par des moyens de guidage formés, d'une part, par deux glissières longitudinales 8b sur la paroi intérieure du tube extérieur 8 et, d'autre part, par deux rainures 9b sur la paroi extérieure du tube intérieur 9.

Les deux glissières 8b sont diamétralement opposées et, dans l'exemple illustré, sont formées chacune par deux petites nervures longitudinales.

Les deux rainures 9b sont également diamétralement opposées et sont dimensionnées pour que les glissières 8b puissent y coulisser.

Pour que le trou traversant 8a puisse être aligné avec le trou traversant 9b, par coulissement des tubes 8, 9 l'un par rapport à l'autre, les trous 8a, 9a sont pratiqués pour que les axes de ceux-ci appartiennent tous les deux à un même plan passant par l'axe longitudinal des tubes 8, 9, et les glissières 8b et les rainures 9b sont disposées pour que les axes longitudinaux de celles-ci soient parallèles à l'axe longitudinal des tubes 8, 9.

Le tube intérieur 9 est réalisé pour être d'épaisseur constante, ce qui conduit à la formation d'une nervure intérieure longitudinale 9c au niveau de chaque rainure 9b.

On monte l'élément de blocage 1 à l'intérieur du tube intérieur 9 en l'y glissant, après l'avoir contraint en flexion, pour que lorsque le bouton 3 arrive en alignement avec le trou 9a, il se projette à travers ce dernier sous l'effet de l'énergie élastique emmagasinée lors de la flexion. Si le trou 9a n'est pas aligné avec le trou 9b, le bouton 3 est en appui contre la paroi intérieure du tube extérieur 8.

Comme représenté sur la Figure 4, lorsque les trous 8a et 9a sont alignés, par exemple après emmanchement du tube intérieur 9 dans le tube extérieur 8 si cela n'avait pas encore été fait, puis coulissement du tube intérieur 9 dans le tube extérieur 8, le bouton 3, toujours par élasticité, est amené à se projeter vers l'extérieur en passant par les trous 8a, 9a, bloquant ainsi en translation les tubes 8 et 9 l'un par rapport à l'autre, avec l'extrémité hémisphérique 3b exposée à l'extérieur.

On souligne ici que l'élément de blocage 1 est dimensionné, en fonction du diamètre des tubes 8 et 9, de telle sorte que, dans la position de blocage des tubes, comme représenté sur la Figure 4, le tube intérieur 9 applique une contrainte de flexion à la bande de matière 2, notamment avec un contact des nervures intérieures 9c avec la face extérieure 2b, et que le bord longitudinal 4a, 5a des pattes 4, 5 est en contact, par les parties en saillie 4c, 5c, avec la paroi intérieure du tube intérieur 9. On peut voir que, dans la position de blocage, les extrémités longitudinales de l'élément de blocage 1 convergent l'une vers l'autre, alors qu'elles divergent dans la position au repos.

A titre d'exemple, pour un tube de section plus petite de diamètre intérieur égal à 36,5 mm, un tube de plus grande section de diamètre intérieur égal à 41,5 mm, les tubes ayant une épaisseur globalement constante de 2 mm, les dimensions de l'élément de blocage 1 peuvent être les suivantes :
- épaisseur de la bande de matière 2 et des pattes 4, 5 = 1,2 mm,
- hauteur totale de l'élément de blocage 1 = 43,7 mm,
- largeur de la bande de matière 2 = 16 mm,
- rayon de courbure interne de la partie centrale de la bande de matière 2 = 17,8 mm,
- rayon de courbure externe de la partie centrale de la bande de matière 2 = 19 mm,
- longueur des pattes 4, 5 = 30,5 mm,
- largeur de la partie en saillie 5c centrale et des deux parties en saillie 4c = 5 mm,
- angle de divergence des pattes 4, 5 = 10°,
- hauteur du bouton d'actionnement 3 = 8,5 mm, et
- rayon de l'extrémité hémisphérique 3b du bouton d'actionnement 3 = 3,5 mm.

Comme représenté sur les Figures 5 et 6, pour débloquer les tubes 8, 9, il suffit à l'utilisateur d'appuyer sur le bouton d'actionnement 3 jusqu'à ce que seule son extrémité hémisphérique 3b se trouve dans le trou 8a, moment auquel l'utilisateur peut faire coulisser manuellement le tube intérieur 9, ce qui amènera la paroi intérieure du trou 8a puis la paroi intérieure du tube extérieur 8 à enfoncer encore davantage le bouton d'actionnement 3 pour le dégager entièrement du trou 8a et à le maintenir dans cette position enfoncée.

Cet appui sur le bouton d'actionnement a également pour effet d'appliquer une contrainte en flexion supplémentaire à la bande de matière 2, permettant à cette dernière d'emmagasiner l'énergie élastique qui ramènera l'élément de blocage 1 dans la position de blocage une fois que les trous 8a et 9a auront été à nouveau alignés, et rapprochant les pattes 4, 5 l'une de l'autre jusqu'à ce que les parties en saillie 4c et 5c viennent se placer au moins en partie dans les parties en retrait 5b et 4b correspondantes.

On souligne ici que le Déposant a découvert que, de manière surprenante, l'élément de blocage 1 peut subir de manière répétée les contraintes et déformations en flexion mentionnées ci-dessus, sans rompre, grâce à la présence des parties en retrait 4b, 5b et des parties en saillie 4c, 5c, avec la configuration décrite ci-dessus. Sans celles-ci, l'élément de blocage 1 ne résisterait pas à une utilisation répétée.

On constate donc que l'élément de blocage selon la présente invention est monté de manière très aisée, sans risque de montage incorrect, et offre une fiabilité améliorée pour une utilisation répétée, tout en assurant une immobilisation des deux tubes aussi bien à l'égard d'une rotation relative que d'une translation et en conservant un contrôle facile et visuel du blocage.

Il est bien entendu que le mode de réalisation préféré de la présente invention qui a été décrit ci-dessus a été donné à titre indicatif et non limitatif et que des modifications peuvent être apportées sans que l'on s'écarte pour autant du cadre de la présente invention.

## Revendications

1. Elément de blocage (1) destiné à bloquer en position relativement l'un à l'autre deux tubes (8, 9), enfilés l'un dans l'autre, et à être introduit dans le tube (8) de section plus petite, ledit élément de blocage (1) se présentant sous la forme d'une bande de matière (2) ayant une direction longitudinale et portant sur une face un bouton d'actionnement (3) bloquant les deux tubes (8, 9), sous l'action d'une force de rappel, par passage à travers un trou traversant (8a, 9a) ménagé dans l'épaisseur de chaque tube (8, 9), **caractérisé par le fait que** l'élément de blocage (1) est réalisé en une matière élastiquement déformable en flexion et suit une forme d'arc avec les deux extrémités longitudinales de l'élément de blocage (1) en regard l'une de l'autre, lesdites extrémités longitudinales présentant, dans leur bord transversal (4a, 5a), au moins une partie en retrait (4b, 5b) et au moins une partie en saillie (4c, 5c), avec la ou chacune des parties en retrait (4b, 5b) et la ou chacune parties en saillie (4c, 5c) de l'une desdites extrémités longitudinales en regard respectivement d'une partie en saillie (5c, 4c) et d'une partie en retrait (5b, 4b) de l'autre extrémité longitudinale, le bouton d'actionnement (3) se trouvant au sommet de l'élément de blocage (1), côté opposé auxdites extrémités longitudinales.

2. Elément de blocage (1) selon la revendication 1, **caractérisé par le fait que** le bord transversal (4a) de l'une des extrémités longitudinales de l'élément de blocage (1) présente au moins deux parties en saillie (4c), de préférence deux parties en saillie (4c), chacune entre deux parties en retrait (4b) et le bord transversal (5a) de l'autre extrémité longitudinale présente au moins deux parties en retrait (5b), de préférence deux parties en retrait (5b), chacune entre deux parties en saillie (5c).

3. Elément de blocage (1) selon la revendication 2, **caractérisé par le fait que** le bord transversal (4a, 5a) de chaque extrémité longitudinale de l'élément de blocage (1) est crénelé, les créneaux formant les parties en retrait (4b, 5b).

4. Elément de blocage (1) selon l'une des revendications 1 à 3, **caractérisé par le fait que** les extrémités longitudinales de l'élément de blocage (1) sont rectilignes ou sensiblement rectilignes et la partie centrale de la bande de matière (2), qui relie les deux extrémités longitudinales, suit un arc de cercle.

5. Elément de blocage (1) selon la revendication 4, **caractérisé par le fait que** les extrémités longitudinales rectilignes s'écartent l'une de l'autre en formant un angle compris entre 10 et 13°, de préférence un angle de 10°, l'angle étant mesuré dans un plan qui est perpendiculaire à la bande de matière (2) et auquel appartient la direction longitudinale de l'élément de blocage (1).

6. Elément de blocage (1) selon l'une des revendications 1 à 5, **caractérisé par le fait que** chaque extrémité longitudinale de l'élément de blocage (1) forme une patte (4, 5) de largeur supérieure à celle de la partie restante de la bande de matière (2), qui s'étend entre les deux pattes (4, 5), les pattes (4, 5) étant, de préférence, de forme rectangulaire.

7. Elément de blocage (1) selon l'une des revendications 1 à 6, **caractérisé par le fait que** deux nervures longitudinales (6) s'étendent sur la face de la bande de matière (2) sur laquelle se trouve le bouton d'actionnement (3), les nervures longitudinales (6) étant disposées de part et d'autre du bouton d'actionnement (3) et, de préférence, s'achevant avant les extrémités longitudinales de l'élément de blocage (1).

8. Elément de blocage (1) selon l'une des revendications 1 à 7, **caractérisé par le fait que** la bande de matière (2) formant l'élément de blocage (1) est en matière plastique, de préférence en polyoxyméthylène.

9. Structure de liaison à tubes télescopiques (7), comprenant deux tubes (8, 9) enfilés l'un dans l'autre de manière télescopique et des moyens de blocage des deux tubes (8, 9) relativement l'un à l'autre, chaque tube (8, 9) présentant au moins un trou traversant (8a, 9a), **caractérisée par le fait que** les moyens de blocage sont formés par un élément de blocage (1) tel que défini à l'une des revendications 1 à 8 placé dans le tube de section plus petite (9), l'élément de blocage (1) étant dimensionné de telle sorte que, dans la position de blocage des deux tubes (8, 9), l'extrémité libre du bouton d'actionnement (3) est exposée à l'extérieur et la bande de matière (2) est contrainte en flexion avec les parties en saillie (4b, 5b) des extrémités longitudinales de l'élément de blocage (1) en contact avec la paroi intérieure du tube de section plus petite (9).

10. Structure de liaison à tubes télescopiques (7) selon la revendication 9, **caractérisée par le fait qu'**elle comporte des moyens de guidage (8b, 9b) en translation du tube de plus petite section (9) à l'intérieur du tube de plus grande section (8), lesquels moyens de guidage (8b, 9b) empêchent une rotation relative entre les tubes (8, 9) autour d'un axe de rotation coaxial à l'axe longitudinal des tubes (8, 9), les axes des trous traversants (8a, 9a) des tubes (8, 9) appartenant donc tous à un même plan passant par l'axe longitudinal des tubes (8, 9), et **par le fait que** la paroi intérieure du tube de plus petite section (9) présente deux nervures intérieures longitudinales (9c) diamétralement opposées et dont les directions longitudinales appartiennent à un plan qui passe par l'axe longitudinal des tubes (8, 9) et est perpendiculaire au plan auquel appartiennent les axes des trous traversants (8a, 9a), l'élément de blocage (1) étant, dans la position de blocage, en contact avec lesdites deux nervures intérieures (9c).

## Patentansprüche

1. Blockierelement (1) zum Blockieren zweier ineinander geschobener Rohre (8, 9) in Position zueinander, das in das Rohr (8) von kleinerem Querschnitt eingeführt wird, wobei das Blockierelement (1) die Form einer Materialbahn (2) mit Längsrichtung aufweist und an einer Seite einen Antriebsknopf (3) trägt, der die beiden Rohre blockiert (8, 9), unter der Einwirkung einer Rückstellkraft, mittels Durchgang durch ein Durchgangsloch (8a; 9a) in der Dicke jedes Rohrs (8, 9), **gekennzeichnet dadurch, dass** das Blockierelement (1) aus einem biegeelastisch verformbaren Material ist und Bogenform hat, wobei die beiden Längsenden des Blockierelements (1) einander gegenüberliegen, wobei die Längsenden an ihrem Querrand (4a, 5a), mindestens ein zurückgezogenes Teil (4b, 5b) und mindestens ein überstehendes Teil (4c, 5c) aufweisen, wobei das oder jedes der zurückgezogenen Teile (4b, 5b) und das oder jedes der überstehenden Teile (4c, 5c) eines der besagten Längsenden einem überstehenden Teil (5c, 4c) bzw. einem zurückgezogenen Teil (5b, 4b) des anderen Längsendes gegenüberliegt, wobei der Antriebsknopf (3) sich an der Spitze des Blockierelements (1) befinden, gegenüber diesen Längsenden.

2. Blockierelement (1) nach Anspruch 1, **gekennzeichnet dadurch, dass** der Querrand (4a) eines der Längsenden des Blockierelements (1) mindestens zwei überstehende Teile (4c) aufweist, vorzugsweise zwei überstehende Teile (4c), jedes zwischen zwei zurückgezogenen Teilen (4b), und der Querrand (5a) des anderen Längsendes weist mindestens zwei zurückgezogene Teile (5b) auf, vorzugsweise zwei zurückgezogene Teile (5b), jedes zwischen zwei überstehenden Teilen (5c).

3. Blockierelement (1) nach Anspruch 2, **gekennzeichnet dadurch, dass** der Querrand (4a, 5a) jedes Längsendes des Blockierelements (1) gezähnt ist, wobei die Zähne die zurückgezogenen Teile (4b, 5b) bilden.

4. Blockierelement (1) nach einem der Ansprüche 1 bis 3, **gekennzeichnet dadurch, dass** die Längsenden des Blockierelements (1) geradlinig oder im wesentlichen geradlinig sind und das Mittelteil der Materialbahn (2), das die beiden Längsenden verbindet, einem Kreisbogen folgt.

5. Blockierelement (1) nach Anspruch 4, **gekennzeichnet dadurch, dass** die geradlinigen Längsenden sich voneinander entfernen und so einen Winkel von 10 bis 13° bilden, vorzugsweise einen Winkel von 10°, wobei der Winkel in einer Ebene senkrecht zur Materialbahn (2) gemessen ist, der die Längsrichtung des Blockierelements (1) angehört.

6. Blockierelement (1) nach einem der Ansprüche 1 bis 5, **gekennzeichnet dadurch, dass** jedes Längsende des Blockierelements (1) eine Lasche (4, 5) bildet, die breiter als der übrige Teil der Materialbahn (2) ist, der sich zwischen den beiden Laschen (4, 5) erstreckt, wobei die Laschen (4, 5) vorzugsweise von rechteckiger Form sind.

7. Blockierelement (1) nach einem der Ansprüche 1 bis 6, **gekennzeichnet dadurch, dass** zwei Längsrippen (6) sich an der Seite der Materialbahn (2) erstrecken, an der sich der Antriebsknopf befindet (3), wobei die Längsrippen (6) zu beiden Seiten des Antriebsknopfes (3) angeordnet sind und vorzugsweise vor den Längsenden des Blockierelements (1) enden.

8. Blockierelement (1) nach einem der Ansprüche 1 bis 7, **gekennzeichnet dadurch, dass** die Materialbahn (2), die das Blockierelement (1) bildet, aus Kunststoff ist, vorzugsweise aus Polyoxymethylen.

9. Verbindungsstruktur zu Teleskop-Rohren (7), die zwei teleskopisch ineinander geschobene Rohre (8,9) umfasst sowie Blockierungsmittel für die beiden Rohre (8, 9) zueinander, wobei jedes Rohr (8, 9) mindestens ein Durchgangsloch (8a, 9a) aufweist, **gekennzeichnet dadurch, dass** die Blockierungsmittel durch ein Blockierelement (1) wie in einem der Patentansprüche 1 bis 8 definiert gebildet sind, das in dem Rohr kleineren Querschnitts (9) platziert ist, wobei das Blockierelement (1) so dimensioniert ist, dass, in der Blockierungsposition der beiden Rohre (8, 9), das freie Ende des Antriebsknopfs (3) nach außen ausgesetzt ist und das Materialband (2) mit den überstehenden Teilen (4b, 5b) der Längsenden des Blockierelements (1) in Kontakt mit der Innenwand des Rohrs kleineren Querschnitts (9) gebogen wird.

10. Verbindungsstruktur zu Teleskop-Rohren (7) nach Anspruch 9, **dadurch gekennzeichnet, dass** sie Führungsmittel (8b, 9b) zum Schieben des Rohrs kleineren Querschnitts (9) in das Rohr größeren Querschnitts (8) umfasst, wobei die Führungsmittel (8b, 9b) eine relative Rotation zwischen den Rohren (8, 9) um eine Rotationsachse koaxial zur Längsachse der Rohre (8, 9) verhindern, so dass die Achsen der Durchgangslöcher (8a, 9a) der Rohre (8, 9) alle derselben Ebene angehören, die durch die Längsachse der Rohre führt (8, 9), sowie dadurch, dass die Innenwand des Rohrs kleineren Querschnitts (9) zwei innere Längsrippen (9c) umfasst, die einander diametral gegenüberliegen und deren Längsrichtungen einer Ebene angehören, die die Längsachse der Rohre (8, 9) durchquert und lotrecht zur Ebene ist, der die Achsen der Durchgangslöcher (8a, 9a) angehören, wobei das Blockierelement (1) in Blockierungsposition in Kontakt mit den beiden inneren Rippen (9c) ist.

## Claims

1. A locking member (1) intended to lock in position, with respect to each other, two tubes (8,9) threaded one into another, and to be inserted within the tube (8) with a smaller section, said locking member (1) being in the form of a material strip (2) having a longitudinal direction and carrying on one face an operating knob (3) locking the two tubes (8, 9), under the action of a restoring force, by passing through a through hole (8a, 9a) provided in the thickness of each tube (8, 9), **characterized by** the fact that the locking member (1) is made of an elastically bend-deforming material and has an arch shape with the two longitudinal ends of the locking member (1) facing each other, said longitudinal ends having, in their transverse edge (4a,5a), at least one recessed part (4b, 5b) and at least one protruding part (4c, 5c), with the or each recessed part (4b,5b) and the or each protruding part (4c, 5c) of one of said longitudinal ends respectively facing a protruding part (5c, 4c) and a recessed part (5b, 4b) of the other longitudinal end, the operating knob (13) being located at the top of the locking member (1), on the side opposite said longitudinal ends.

2. The locking member (1) according to claim 1, **characterized by** the fact that the transverse edge (4a) of one of the longitudinal ends of the locking member (1) has at least two protruding parts (4c), preferably two protruding parts (4c), each one between two recessed parts (4b) and the transverse edge (5a) of the other longitudinal end has at least two recessed parts (5b), preferably two recessed parts (5b), each one between two protruding parts (5c).

3. The locking member (1) according to claim 2, **characterized by** the fact the transverse edge (4a, 5a) of each longitudinal end of the locking member (1) is crenelated, the crenels forming the recessed parts (4b,5b).

4. The locking member (1) according to one of claims 1 to 3, **characterized by** the fact that the longitudinal ends of the locking member (1) are rectilinear or substantially rectilinear and the central part of the material strip (2), which connects the two longitudinal ends, follows an arc of circle.

5. The locking member (1) according to claim 4, **characterized by** the fact that the rectilinear longitudinal ends move away from each other with forming an angle between 10 and 13°, preferably an angle of 10°, the angle being measured within a plane which is perpendicular to the material strip (2) and to which belongs the longitudinal direction of the locking member (1).

6. The locking member (1) according to one of claims 1 to 5, **characterized by** the fact that each longitudinal end of the locking member (1) forms a leg (4,5) with a width greater than that of the remaining part of the material strip (2), which extends between the two legs (4, 5), the legs (4,5) having preferably a rectangular shape.

7. The locking member (1) according to one of claims 1 to 6, **characterized by** the fact that two longitudinal ribs (6) extend on the face of the material strip (2) on which the operating knob (3) is located, the longitudinal ribs (6) being arranged on either side of the operating knob (3) and preferably ending before the longitudinal ends of the locking member (1).

8. The locking member (1) according to one of claims 1 to 7, **characterized by** the fact that the material strip (2) forming the locking member (1) is made of plastic material, preferably polyoxymethylene.

9. A connecting structure (7) with telescopic tubes, comprising two tubes (8, 9) telescopically threaded one into another and means for locking the two tubes (8, 9) with respect to each other, each tube (8, 9) having at least one through hole (8a, 9a), **characterized by** the fact that the locking means are formed by a locking member (1) as defined in one of claims 1-8 arranged in the tube (9) with a smaller section, the locking member (1) being sized such that, in the position of locking the two tubes (8, 9), the free end of the operating knob (3) is exposed to the outside and the material strip (2) is forced to bend with the protruding parts (4b, 5b) of the longitudinal ends of the locking member (1) in contact with the inner wall of the tube (9) with a smaller section.

10. The connecting structure (7) with telescopic tubes according to claim 9, **characterized by** the fact that it comprises means (8b, 9b) for guiding in translation the the tube (9) with a smaller section within the tube (8) with a larger section, said guiding means (8b, 9b) prevent a relative rotation between the tubes (8, 9) around a rotation axis coaxial to the longitudinal axis of the tubes (8, 9), the axes of the through holes (8a, 9a) of the tubes (8, 9) all belonging to a same plane passing through the longitudinal axis of the tubes (8, 9), and by the fact that the inner wall of the tube (9) with a smaller section has two longitudinal inner ribs (9c) that are diametrically opposite and the longitudinal directions of which belong to a plane passing through the longitudinal axis of the tubes (8, 9) and being perpendicular to the plan to which belong the axes of the through holes (8a, 9a), the locking member (1) being, in the locking position, in contact with said two inner ribs (9c).
